(19) Europäisches Patentamt / European Patent Office / Office européen des brevets

(11) **EP 4 428 573 A1**

(12) **EUROPEAN PATENT APPLICATION**

(43) Date of publication:
**11.09.2024 Bulletin 2024/37**

(51) International Patent Classification (IPC):
**G01S 13/75** (2006.01)        **G01S 13/76** (2006.01)
**G01S 5/00** (2006.01)

(21) Application number: **23217396.3**

(22) Date of filing: **18.12.2023**

(52) Cooperative Patent Classification (CPC):
**G01S 13/758; G01S 13/765;** G01S 5/00

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **09.03.2023 US 202363451103 P**

(71) Applicant: **Nokia Technologies Oy**
**02610 Espoo (FI)**

(72) Inventors:
• **SVENDSEN, Simon**
  **Aalborg (DK)**
• **HARREBEK, Johannes**
  **Aalborg (DK)**
• **VEJLGAARD, Benny**
  **Gistrup (DK)**
• **BARBU, Oana-Elena**
  **Aalborg (DK)**

(74) Representative: **Nokia EPO representatives**
**Nokia Technologies Oy**
**Karakaari 7**
**02610 Espoo (FI)**

(54) **ESTIMATION OF CHARGE TIME FOR A PASSIVE AMBIENT INTERNET OF THINGS TAG USING PERIODIC POSITIONING ACTIVATION REFERENCE SIGNALS**

(57)    Systems, methods, apparatuses, and computer program products for utilizing a periodic PARS to estimate the charge time of fully passive A-IoT tags; a PARS reconfiguration request from a reader; and communication of the estimated A-IoT tag charge time and/or the compensated receive time of a received back-scattered response from a known A-IoT tag. One method may include transmitting, by a session control unit, at least one positioning activation reference signal configuration associated with at least one positioning activation reference signal burst. The at least one positioning activation reference signal configuration may comprise at least one of duration or periodicity of the at least one positioning activation reference signal burst.

**Description**

**TECHNICAL FIELD:**

Some example embodiments may generally relate to mobile or wireless telecommunication systems, such as 3rd Generation Partnership Project (3GPP) Long Term Evolution (LTE), 5th generation (5G) radio access technology (RAT), new radio (NR) access technology, 6th generation (6G), and/or other communications systems. For example, certain example embodiments may relate to systems and/or methods for utilizing a periodic positioning activation reference signal (PARS) to estimate the charge time of fully passive ambient Internet of Things (A-IoT) tags; a PARS reconfiguration request from a reader; and communication of the estimated A-IoT tag charge time and/or the compensated receive time of a received back-scattered response from a known A-IoT tag.

**BACKGROUND:**

Examples of mobile or wireless telecommunication systems may include radio frequency (RF) 5G RAT, the Universal Mobile Telecommunications System (UMTS) Terrestrial Radio Access Network (UTRAN), LTE Evolved UTRAN (E-UTRAN), LTE-Advanced (LTE-A), LTE-A Pro, NR access technology, and/or MulteFire Alliance. 5G wireless systems refer to the next generation (NG) of radio systems and network architecture. A 5G system is typically built on a 5G NR, but a 5G (or NG) network may also be built on E-UTRA radio. It is expected that NR can support service categories such as enhanced mobile broadband (eMBB), ultra-reliable low-latency-communication (URLLC), and massive machine-type communication (mMTC). NR is expected to deliver extreme broadband, ultra-robust, low-latency connectivity, and massive networking to support the Internet of Things (IoT). The next generation radio access network (NG-RAN) represents the radio access network (RAN) for 5G, which may provide radio access for NR, LTE, and LTE-A. It is noted that the nodes in 5G providing radio access functionality to a user equipment (*e.g.*, similar to the Node B in UTRAN or the Evolved Node B (eNB) in LTE) may be referred to as next-generation Node B (gNB) when built on NR radio, and may be referred to as next-generation eNB (NG-eNB) when built on E-UTRA radio.

**SUMMARY:**

In accordance with some example embodiments, a method may include transmitting, by a session control unit, at least one positioning activation reference signal configuration associated with at least one positioning activation reference signal burst. The at least one positioning activation reference signal configuration may include at least one of duration or periodicity of the at least one positioning activation reference signal burst.

In accordance with certain example embodiments, an apparatus may include means for transmitting at least one positioning activation reference signal configuration associated with at least one positioning activation reference signal burst. The at least one positioning activation reference signal configuration may include at least one of duration or periodicity of the at least one positioning activation reference signal burst.

In accordance with various example embodiments, a non-transitory computer readable medium may include program instructions that, when executed by an apparatus, cause the apparatus to perform at least a method. The method may include transmitting at least one positioning activation reference signal configuration associated with at least one positioning activation reference signal burst. The at least one positioning activation reference signal configuration may include at least one of duration or periodicity of the at least one positioning activation reference signal burst.

In accordance with some example embodiments, a computer program product may perform a method. The method may include transmitting at least one positioning activation reference signal configuration associated with at least one positioning activation reference signal burst. The at least one positioning activation reference signal configuration may include at least one of duration or periodicity of the at least one positioning activation reference signal burst.

In accordance with certain example embodiments, an apparatus may include at least one processor and at least one memory storing instructions that, when executed by the at least one processor, cause the apparatus at least to transmit at least one positioning activation reference signal configuration associated with at least one positioning activation reference signal burst. The at least one positioning activation reference signal configuration may include at least one of duration or periodicity of the at least one positioning activation reference signal burst.

In accordance with various example embodiments, an apparatus may include transmitting circuitry configured to transmit at least one positioning activation reference signal configuration associated with at least one positioning activation reference signal burst. The at least one positioning activation reference signal configuration may include at least one of duration or periodicity of the at least one positioning activation reference signal burst.

In accordance with some example embodiments, a method may include receiving, by a reader device, from a session control unit at least one positioning activation reference signal configuration associated with at least one positioning activation reference signal burst. The at least one positioning activation reference signal configuration may include at least one of duration or periodicity of the at least one positioning activation reference signal burst. The method may further include calculating, by the reader device, a convergence of return time trip.

In accordance with certain example embodiments, an apparatus may include means for receiving from a session control unit at least one positioning activation reference signal configuration associated with at least one positioning activation reference signal burst. The at least one positioning activation reference signal configuration may include at least one of duration or periodicity of the at least one positioning activation reference signal burst. The apparatus may further include means for calculating a convergence of return time trip.

In accordance with various example embodiments, a non-transitory computer readable medium may include program instructions that, when executed by an apparatus, cause the apparatus to perform at least a method. The at least one positioning activation reference signal configuration may include at least one of duration or periodicity of the at least one positioning activation reference signal burst. The method may include receiving from a session control unit at least one positioning activation reference signal configuration associated with at least one positioning activation reference signal burst. The method may further include calculating a convergence of return time trip.

In accordance with some example embodiments, a computer program product may perform a method. The method may include receiving from a session control unit at least one positioning activation reference signal configuration associated with at least one positioning activation reference signal burst. The at least one positioning activation reference signal configuration may include at least one of duration or periodicity of the at least one positioning activation reference signal burst. The method may further include calculating a convergence of return time trip.

In accordance with certain example embodiments, an apparatus may include at least one processor and at least one memory storing instructions that, when executed by the at least one processor, cause the apparatus at least to receive from a session control unit at least one positioning activation reference signal configuration associated with at least one positioning activation reference signal burst. The at least one positioning activation reference signal configuration may include at least one of duration or periodicity of the at least one positioning activation reference signal burst. The at least one memory and instructions, when executed by the at least one processor, may further cause the apparatus at least to calculate a convergence of return time trip.

In accordance with various example embodiments, an apparatus may include receiving circuitry configured to receive from a session control unit at least one positioning activation reference signal configuration associated with at least one positioning activation reference signal burst. The at least one positioning activation reference signal configuration may include at least one of duration or periodicity of the at least one positioning activation reference signal burst. The apparatus may further include calculating circuitry configured to calculate a convergence of return time trip.

## BRIEF DESCRIPTION OF THE DRAWINGS:

For a proper understanding of example embodiments, reference should be made to the accompanying drawings, wherein:

FIG. 1A illustrates an example of a mono-static configuration where an activator and reader are located in the same entity;
FIG. 1B illustrates an example of a bi/multi-static configuration where an activator and one or more readers are located in separate entities;
FIG. 2 illustrates a signaling diagram according to some example embodiments;
FIG. 3 illustrates an example of a visualization of a fully passive A-IoT Tag illuminated with a sufficiently long periodicity of the PARS according to certain example embodiments;
FIG. 4 illustrates another example of a visualization of a fully passive A-IoT tag illuminated with insufficient periodicity of the PARS according to certain example embodiments;
FIG. 5 illustrates another example of a visualization of a semi-passive A-IoT tag with predefined behavior when the activation signal is a PARS according to certain example embodiments;
FIG. 6 provides a legend for the descriptions of FIGs. 3-5;
FIG. 7 illustrates an example of various network devices according to some example embodiments; and
FIG. 8 illustrates an example of a 5G network and system architecture according to certain example embodiments.

## DETAILED DESCRIPTION:

It will be readily understood that the components of certain example embodiments, as generally described and illustrated in the figures herein, may be arranged and designed in a wide variety of different configurations. Thus, the following detailed description of some example embodiments of systems, methods, apparatuses, and computer program products for utilizing a PARS to estimate the charge time of fully passive A-IoT tags; a PARS reconfiguration request from a reader; and communication of the estimated A-IoT tag charge time and/or the compensated receive time of a received back-scattered response from a known A-IoT tag is not intended to limit the scope of certain example embodiments, but is instead representative of selected example embodiments.

With respect to IoT applications, 3GPP includes narrowband (NB)-IoT/enhanced machine type communication (eMTC) and NR reduced capability (RedCap) functionalities to satisfy the requirements of low cost and low power devices for wide area IoT communication. These IoT devices may consume tens or hundreds of milliwatts power during transceiving, with minimal cost. However, to achieve the internet of everything, IoT devices with ten or even a hundred times lower cost and power consumption may be needed, especially for a large number of applications requiring battery-free devices.

The number of IoT connections has been rapidly growing in recent years, and is predicted to eventually exceed hundreds of billions. With more IoT devices expected to be interconnected to improve production efficiency and increase convenience, these IoT devices will require a further reduction of size, cost, and power consumption. In particular, regular replacement of batteries for IoT devices would be impractical due to the tremendous consumption of materials and manpower. Instead, energy may be harvested from environments to power IoT devices for self-sustainable communications, especially in applications with a high number of devices (*e.g.*, ID tags and sensors).

One critical issue with existing 3GPP technologies for some IoT applications is energy harvesting capabilities with consideration of limited device size. Cellular devices usually consume tens or even hundreds of milliwatts power for transceiver processing. For example, with a NB-IoT module, the typical current consumption for receiving signals is about 60mA with a supply voltage higher than 3. 1V, and 70mA for transmitting processing at 0dBm transmit power. Furthermore, the output power provided by a typical energy harvester is mostly below 1 milliwatt, partly due to the small size of a few square centimeters for most IoT devices. Thus, since the available harvestable power is far less than the consumed power, it would be impractical in most cases to power cellular devices only with energy harvesting.

One possible solution may be to integrate energy harvesting with rechargeable batteries and/or supercapacitors. However, rechargeable batteries and supercapacitors may both suffer from shortened lifetimes. In addition, it may be difficult to provide constant charging currents or voltages with energy harvesting, while longtime continuous charging may be needed due to the very small output power from energy harvesting. Inconsistent charging currents and longtime continuous charging will both contribute to decreased battery life. In addition, the lifetime of supercapacitors may be significantly reduced in high temperature environments (*e.g.*, less than 3 years at 50° C). In addition, IoT devices may be significantly smaller; specifically, since "button cell" batteries (*e.g.*, 5 to 25 mm, CR2032) may only provide a current of a few tens of milliamps, a battery with a much larger size (*e.g.*, AA battery) may be required to power cellular devices, which may be larger than the IoT device itself. To store energy for a proper duration of working (*e.g.*, one second), the required capacitance of a supercapacitor may be a hundred millifarads (mF); however, the size of such supercapacitors may also be larger than the IoT device.

Thirdly, both rechargeable batteries and supercapacitors may be more expensive than the module itself. Even when purchased in large quantities, the cost of a suitable battery or supercapacitor may be relatively expensive, potentially doubling the cost of the IoT device.

Radio frequency identification (RFID) technology can support battery-free tags (devices). The power consumption of some commercial, passive RFID tags can be as low as 1 microwatt ($\mu$W). Low power consumption may be possible with envelope detection for downlink data reception and back-scatter communication for uplink data transmission. RFID primarily designed for short-range communications (*e.g.*, less than 10 meters). However, the air interface and transmission scheme of RFID may hinder improving its link budget and capabilities of supporting a scalable network. Extremely low power consumption of back-scatter communication is used in technologies such as Wi-Fi (*i.e.*, IEEE 802. 11b), Bluetooth, UWB (ultra wideband), and Long Range (LoRa) (*i.e.*, ITU-T Y.4480). A few or tens of microwatts power consumption can be supported for passive IoT tags based on, or with, small modifications to these air interfaces. For example, a LoRa tag implemented with commercial off-the-shelf components may transmit sensing data to a receiver as far as 380 meters away. However, a comprehensive system design is needed that satisfies the requirements of various IoT use cases.

3GPP IoT technology, suitable for deployment in a 3GPP system, may rely on ultra-low complexity devices with ultra-low power consumption for the very-low end IoT applications. This may address scenarios that cannot otherwise be fulfilled based on existing 3GPP low-power wide-area (LPWA) IoT technology (*e.g.*, NB-IoT including with reduced peak Tx power).

In terms of energy storage, 3GPP IoT technology may consider device characteristics, such as battery-free devices with no energy storage capabilities, and instead completely dependent on the availability of an external source of energy (*e.g.*, harvesting). In addition, 3GPP IoT technology may also consider devices with limited energy storage capabilities that do not need to be replaced or recharged manually. Device categorization based on corresponding characteristics (*e.g.*, energy source, energy storage capability, passive/active transmission, etc.) may also be considered. A 3GPP IoT device's peak power consumption may be limited by its practical form factor for particular IoT cases, as well as its energy source.

Development of 3GPP IoT technologies may also identify suitable deployment scenarios and their characteristics. In particular, 3GPP IoT technologies may also be based upon indoor/outdoor environments, base station characteristics (*e.g.*, macro/micro/pico cells-based deployments), and connectivity topologies, including which nodes (*e.g.*, base station, UE, relay, repeater, etc.) can communicate with target devices. 3GPP IoT technologies may also depend upon time-division duplex (TDD)/frequency-division duplex (FDD), frequency bands in licensed or unlicensed spectrum, any coexistence with UEs and infrastructure in frequency bands for other 3GPP technologies, and any device-originated and/or device-terminated traffic assumptions.

A set of RAN design targets may be formulated based on the identified deployment scenarios and their characteristics for the relevant use cases, including at least power consumption, complexity, coverage, data rate, and positioning accuracy.

Several use cases may require tag position estimation that rely on a return time travel (RTT) of a back-scattered signal from the passive A-IoT tag. However, different types of tags may have different response times, from when the activation/positioning signal is received, to the actual activation/modulation of the back-scattered signal. This may occur due to the required charge time for the passive A-IoT tag that determines when the passive A-IoT tag can initiate its modulation of the back-scattered signal.

The charge time of a passive A-IoT tag may depend on energy storage capabilities (*e.g.*, fully passive (battery-free) or semi-passive (small battery or super capacitor)), energy harvesting capabilities (*e.g.*, only RF signals or other ambient energy sources like solar, kinetic, etc.), and current conditions at the passive A-IoT tag (*e.g.*, charge level and the energy level of the received harvesting signal, and thus power level and duration).

The charge time for each passive A-IoT tag to be positioned may be derived for the current channel conditions at the passive A-IoT tag when the position reference signal (PRS) is transmitted by an activator, in order to derive an accurate position estimate of the tag device. A charge time for an A-IoT tag of only 3ns may result in a positioning error of 1 meter; thus, this charge delay may significantly impair positioning accuracy.

Certain example embodiments described herein may have various benefits and/or advantages to overcome the disadvantages described above. For example, certain example embodiments may enable estimation of the charge time ($\tau_c$) of fully passive A-IoT tags, thereby increasing positioning accuracy for fully passive A-IoT tags. Thus, certain example embodiments discussed below are directed to improvements in computer-related technology.

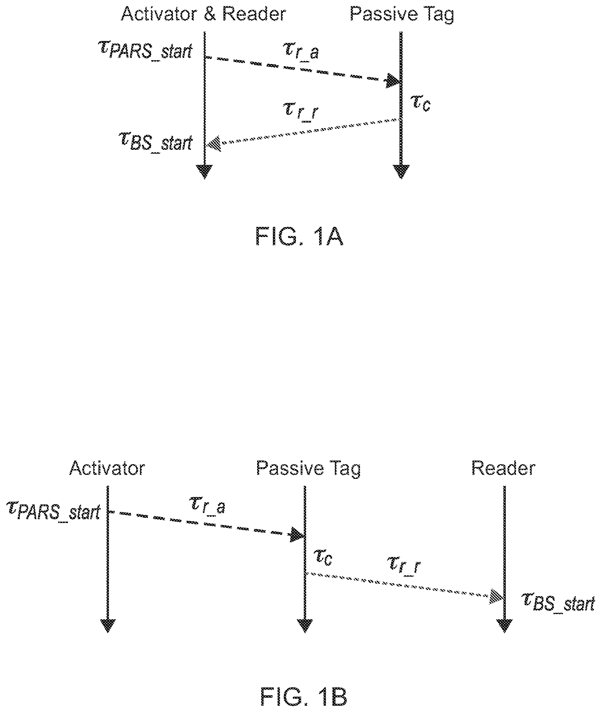

Some example embodiments described herein may include configurations that are mono-static (*i.e.*, activator and reader are located in same entity), as shown in FIG. 1A, or bi- or multi-static (*i.e.*, activator and readers are located in separate entities), as shown in FIG. 1B. As used in these figures, $\tau_{PARS\_start}$ may denote the start time of the activation; $\tau_{BS\_start}$ may denote the start time of the received back-scatter signal; $\tau_{r\_a}$ may denote the propagation time between the activator and the A-IoT tag; $\tau_{r\_r}$ may denote the propagation time between the reader and the A-IoT tag; and $\tau_c$ may denote the charge time at the A-IoT tag for the current channel conditions. RTT may then be estimated according to

$$RTT = \tau_{BS\_start} - \tau_{PARS\_start} - \tau_c,$$

allowing a reader in an ambient IoT network to estimate the charge time ($\tau_c$) at the A-IoT tag.

Certain example embodiments may enable determining the charge time ($\tau_c$) of an A-IoT tag by utilizing periodic PARS when deriving the RTT for individual A-IoT tags. The configuration and resource allocation of the PARS may be controlled by a session control unit (SCU) that could be a separate entity, a base station (*e.g.*, eNB, gNB), a location management function (LMF), or a part of a A-IoT reader or activator. Two different A-IoT tag types may be used, specifically a fully passive A-IoT tag which may continue to modulate the activation signal so long as the activation signal is on, and a semi-passive IoT tag with predefined behavior.

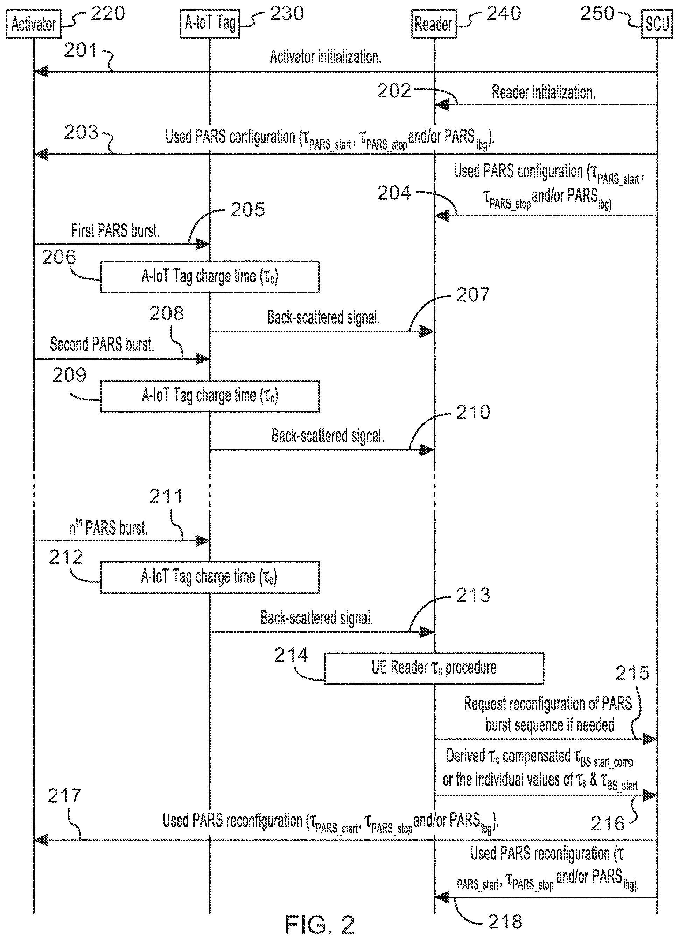

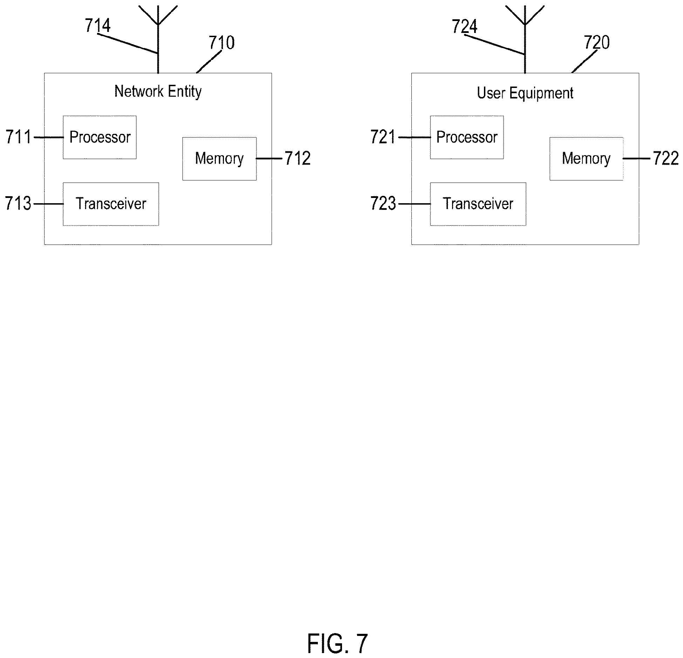

FIG. 2 illustrates an example of a signaling diagram for utilizing a PARS to estimate the charge time of fully passive A-IoT tags; a PARS reconfiguration request from a reader; and communication of the estimated A-IoT tag charge time and/or the compensated receive time of a received back-scattered response from a known A-IoT tag. Any of Activator 220, A-IoT tag 230, Reader 240, and SCU 250 may be similar to NE 710 or UE 720, as illustrated in FIG. 7, according to certain example embodiments.

At step 201, SCU 250 may transmit an activator initialization message to Activator 220. Similarly, at step 202, SCU 250 may transmit a reader initialization message to Reader 240. The initialization message and/or reader initialization message may notify Activator 220 and Reader 240, respectively, that they should serve as an activator and reader, respectively, including according to certain legacy configuration, such as Tx power level.

At step 203, SCU 250 may allocate a current PARS configuration to Activator 220, which may be a default PARS configuration for the first initialization. For example, the current PARS configuration may include a start time of the PARS burst ($\tau_{PARS\_start}$), a stop time of the PARS burst ($\tau_{PARS\_stop}$), and/or a highest PARS burst energy granularity ($PARS_{lbg}$).

At step 204, SCU 250 may inform Reader 240 of the current PARS configuration, including $\tau_{PARS\_start}$, $\tau_{PARS\_stop}$, and/or $PARS_{lbg}$. In certain example embodiments, Reader 240 may listen for modulated back-scattered A-IoT responses after each PARS burst.

In certain example embodiments, the current PARS configuration may include three predefined single bit values/bits. For example, a first index may include bit value 0 to indicate a PARS burst total energy, and bit value 1 to indicate a PARS periodicity. A second index may include bit value 0 to indicate an increase of the value indicated in the first index (*i.e.*, total energy of the PARS burst or PARS periodicity), and bit value 1 may indicate a decrease of the value indicated in the first index (*i.e.*, total energy of the PARS burst or PARS periodicity. A third index may include bit value 1 to indicate that PARS burst total power refinement required.

In some example embodiments, SCU 250/Activator 220 may define a list of supported PARS burst durations, burst power levels, and/or burst periodicities, and may use 6 to 12 bits, depending on the number of supported PARS configuration granularities. The current PARS configuration may include two predefined x-bit values. For example, the current PARS configuration may request 2 bits for the selection, and 2 or 3 bits for the required configuration change for that option. The first x-bit index may include bit value 0 to indicate PARS burst duration; bit value 1 to indicate PARS burst power level; and/or bit value 2 to indicate PARS burst periodicity. Similarly, the second index may include bit value 0 to indicate PARS burst duration, power level and/or burst periodicity configuration# 1; bit value 1 to indicate PARS burst duration, power level or burst periodicity configuration#2; and/or bit value y to indicate PARS burst duration, power level and/or burst periodicity configuration#x.

In various example embodiments, SCU 250/Activator 220 may define a list of PARS sequences, and may use 6 to 12 bits, depending on the number of supported PARS sequences. Reader 240 may request a PARS reconfiguration by one predefined x-bit value. For example, a first x-bit index may include bit value 0 to indicate PARS sequence#1; bit value 1 to indicate PARS sequence#2; and bit value x to indicate PARS sequence#x.

At step 205, Activator 220 may transmit the first PARS burst to A-IoT tag 230. At step 206, A-IoT tag 230 may determine charge time ($\tau_c$) for the current channel condition. For example, there may be an indication that A-IoT tag 230 needs time to charge before it can back-scatter. As a result, the charge time of a tag may be unknown by a passive tag, and only known (estimated) by the reader, when a specific convergence of the back-scattered tag signal has been determined.

Charge time ($\tau_c$) may be based upon a delay at A-IoT tag 230, which may affect the measured RTT. At step 207, A-IoT tag 230 may transmit to Reader 340 at least one possible modulated back-scatter signal.

At step 208, Activator 220 may transmit to A-IoT tag 230 a second PARS burst. At step 209, A-IoT tag 230 may determine charge time ($\tau_c$) for the current channel condition. At step 210, A-IoT tag 230 may transmit to Reader 240 at least one possible modulated back-scatter signal.

At step 211, Activator 220 may transmit to A-IoT tag 230 an $n^{th}$ PARS burst. At step 212, A-IoT tag 230 may determine charge time ($\tau_c$) for the current channel condition. At step 213, A-IoT tag 230 may transmit to Reader 240 at least one possible modulated back-scatter signal.

At step 214, Reader 240 may evaluate when RTTs have converged. For example, a certain PARS configuration may generate a converged specific back-scattered pattern from A-IoT tag 230. Reader 240 may then search for known unique back-scattered response from A-IoT tag 230.

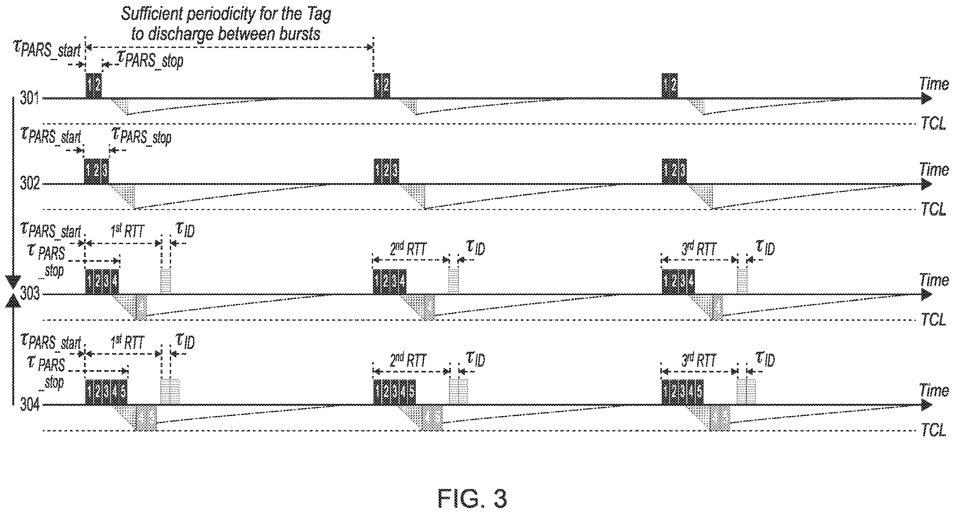

At step 215, Reader 240 may transmit a request to SCU 250 for reconfiguration of the PARS burst sequence. Reader 240 may determine the PARS reconfiguration request to request a back-scatter response from A-IoT tag 230 in order to derive charge time ($\tau_c$). In various example embodiments, the request may include increasing or decreasing the total energy of the PARS bursts, increasing or decreasing periodicity of the PARS burst, and utilizing the highest PARS burst energy granularity (*i.e.*, $PARS_{lbg}$). As discussed below, FIGs. 3-5 describe various ways how Reader 240 may request a specific PARS reconfiguration at step 215.

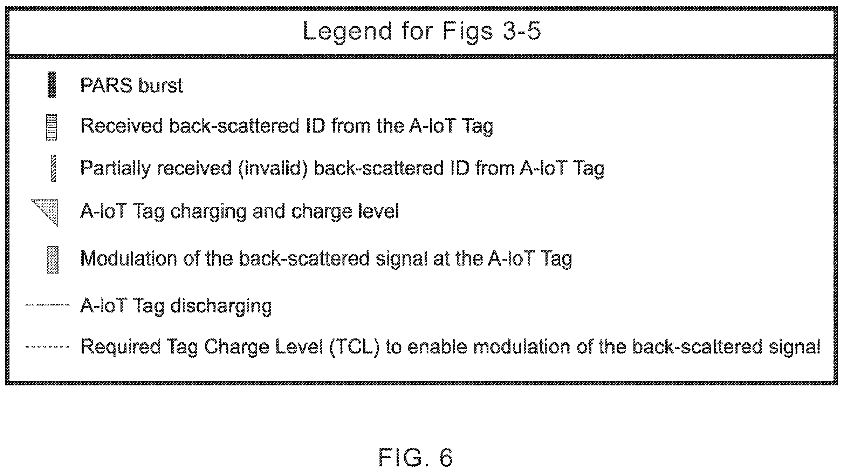

Certain example embodiments may relate to a fully passive A-IoT tag illuminated with a sufficiently long periodicity of the PARS, for the passive A-IoT tag to fully discharge between the PARS bursts. An A-IoT tag reader may rely on back-scatter signals received from the A-IoT tag. FIG. 3 depicts the steps of such embodiments, with legend provided in FIG. 6 for PARS burst, received back-scattered ID from the A-IoT tag, A-IoT tag charging and charge level, modulation of the back-scattered signal at the A-IoT tag, A-IoT tag discharging, and required tag charge level (TCL) to enable modulation of the back-scattered signal.

At step 301, an initial configured power level and periodicity of the PARS may be insufficient for a passive A-IoT tag to charge and back-scatter an ID response. Since the reader is not receiving the ID from a known tag, the A-IoT tag may request the SCU to increase the total energy of the PARS burst. The SCU may choose to increase the burst duration, or allow the activator to increase its power level instead and keep the PARS burst duration. Both options may result in the same desired change in the back-scatted A-IoT IDs, assuming that all of the A-IoT tags are within range. FIG. 3 shows that the duration of PARS bursts is increased by x number of PARS bursts, indicated with 1, 2, 3, etc. The duration of the PARS may increased from 2 boxes at Step 1 to 3 boxes in Step 2. The duration of each box may be the highest possible granularity or a default multiplication of that value, which may also depend on the UL resource allocation from the gNB. In addition, the propagation time between the activator and A-IoT Tag ($\tau_{r\_a}$), and the reader and A-IoT Tag ($\tau_{r\_r}$) may be the duration of three box intervals, and the A-IoT ID back-scatter time ($\tau_{ID}$) may be one box interval.

At step 302, with the reader still not receiving the ID from the tag, the reader may inform the activator to increase the total energy of the PARS burst.

At step 303, the reader may receive one back-scatted ID from a known tag per transmitted PARS burst, and may now measure an RTT for each PARS burst. The reader may determine whether each of the measured RTTs are within a threshold. If the measured RTT values are within a threshold, the reader may conclude that the A-IoT tag charge time $\tau_c$ has converged, and derive a first estimate of $\tau_c$ using the following equation:

$$\tau_c \approx \tau_{PARS\_start} - \tau_{PARS\_stop} - \tau_{ID},$$

wherein $_{PARS\_start}$ may denote a start time of the PARS burst, $_{PARS\_stop}$ may denote a stop time of the PARS burst, and $\tau_{ID}$ may denote a duration of the A-IoT tag ID modulation.

The derived $\tau_c$ may not be the correct value, depending on the increase in burst duration from Step 302 to 303. If the increase in duration was performed with the highest granularity, then the derived value of the A-IoT Tag charge time $\tau_c$ may be the best value that can be obtained for the current channel conditions. However, if that is not the case, a refinement may be performed to find the transition from Step 302 to 303, and therefore the best estimate of $\tau_c$.

At step 304, the initial burst duration may be longer than required, whereby the reader may receive more than one modulated A-IoT tag ID per PARS burst, and can thereby inform the activator to reduce the PARS burst duration.

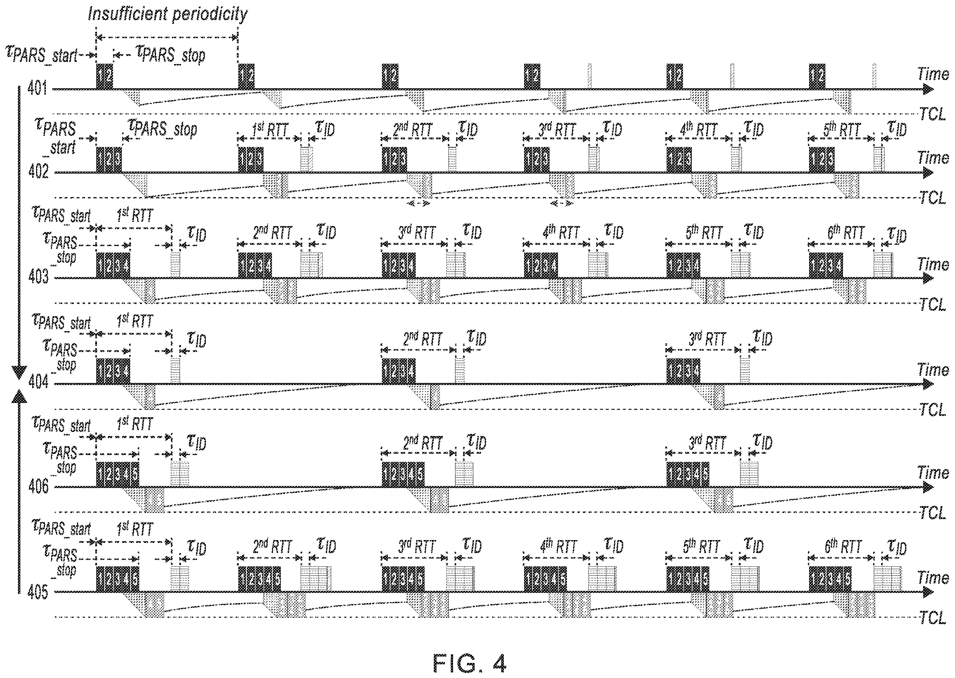

Similar to the embodiments shown in FIG. 3, some example embodiments may instead relate to a fully passive A-IoT Tag using an insufficient periodicity of the PARS. Specifically, a reader may rely on back-scatter signals received from the A-IoT tag, as shown in FIG. 4 (with legend provided in FIG. 6), which also depicts a partially (*i.e.*, invalid) back-scattered ID received from the A-IoT tag.

At step 401, an initial configured duration and periodicity of the PARS is insufficient for the passive A-IoT to charge and back-scatter an ID response. As the reader is not receiving an ID from a known tag, it may inform the SCU to increase the total energy of the PARS burst. The periodicity of the PARS may be insufficient for the A-IoT tag to fully discharge, so a known tag ID may be received at some point in time depending on the number of transmitted PARS bursts. However, that will not change the conclusion derived by the reader.

At step 402, the reader may receive a known ID from the tag for each PARS burst, except the first PARS burst. The reader may now conclude that the burst duration of the PARS is too short for the A-IoT tag to fully charge and back-scatter on a single burst, and may inform the SCU to increase the total energy of the PARS burst (*i.e.*, PARS duration).

At step 403, the reader may receive a known ID from the tag for the first PARS burst, as well as more than one A-IoT tag ID for the remaining PARS bursts. The reader may conclude that the burst periodicity of the PARS is too short for the A-IoT tag to fully discharge between the PARS bursts, and may inform the SCU to increase the PARS periodicity.

At step 404, the reader may only receive one back-scatted ID from a known tag for each PARS burst, and may measure a RTT for each PARS burst. The reader may determine if each of the measured RTTs are within a threshold. If the measured RTT values are within a threshold, the reader may conclude that the A-IoT Tag charge time $\tau_c$ has converged, and a first estimate of $\tau_c$ can be derived by using the following equation:

$$\tau_c \approx \tau_{PARS\_start} - \tau_{PARS\_stop} - \tau_{ID},$$

where $_{PARS\_start}$ may denote start time of the PARS burst, $_{PARS\_stop}$ may denote a stop time of the PARS burst, and $\tau_{ID}$ may denote a duration of the A-IoT Tag ID modulation.

However, the derived $\tau_c$ may be an incorrect value depending on the increase in burst duration from Step 402 to Step 403. If the increase in duration was performed with the shortest granularity, then the derived value of the A-IoT Tag charge time $\tau_c$ may be the best value that can be obtained for the current channel conditions. However, if that is not the case, then a refinement must be performed to find the transition described above with respect to FIG. 3 from Step 302 to Step 303, and therefore the best estimate of $\tau_c$ (*e.g.*, transition in FIG. 3).

At step 405, the initial burst duration may be longer than required. Specifically, the reader may receive more than one modulated A-IoT tag ID for all PARS burst, and may therefore inform the SCU to increase the PARS periodicity.

At step 406, more than one modulated A-IoT tag ID may be received for all PARS bursts, and the reader may then inform the SCU to decrease the total energy of the PARS burst.

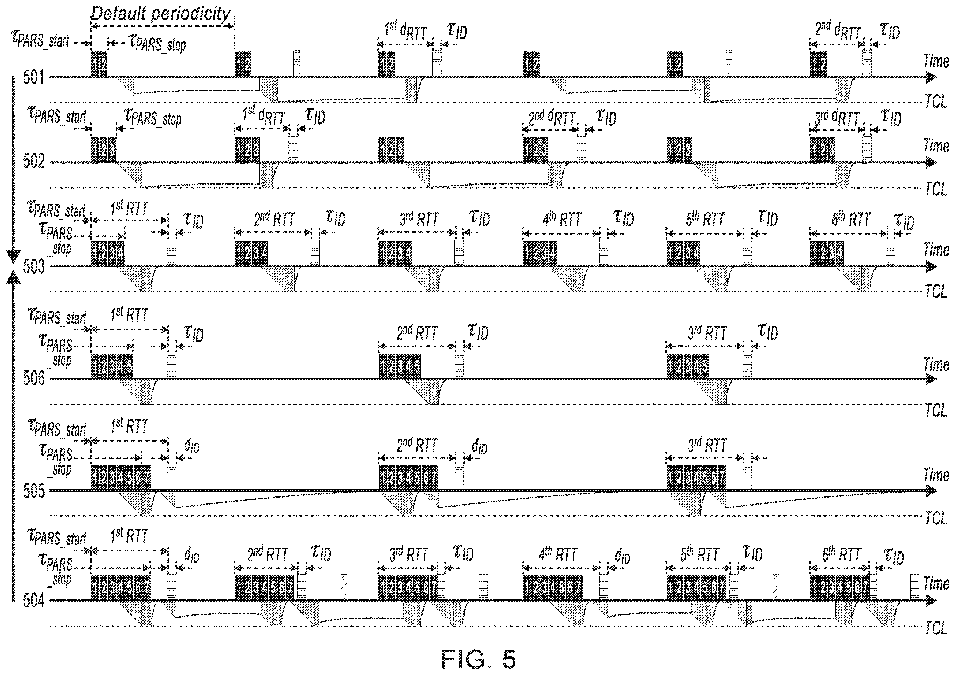

Various example embodiments may relate to a semi-passive A-IoT tag with predefined behavior when the activation signal is a PARS, as shown in FIG. 5 (with legend provided in FIG. 6). Such a semi-passive A-IoT may only respond with a single modulated back-scatter signal, which could be its ID, and thereafter purposely discharge as fast as possible. At step 501, the initial configured duration and periodicity of the PARS may be insufficient for the semi-passive A-IoT to maintain its charge above the TCL and back-scatter an ID response for every PARS burst. Since the reader is not receiving the ID from the tag for all bursts, the reader may inform the SCU to increase the total energy of the PARS burst (*i.e.*, PARS duration).

At step 502, the reader may still not receive the back-scattered ID from the tag for all PARS bursts, and may inform the SCU to increase the total energy of the PARS burst.

At step 503, the reader may only receive one back-scatted ID from a known tag for each PARS burst, and may now measure a RTT for each PARS burst. The reader may determine if each of the measured RTTs are within a threshold. If the measured RTT values are within a threshold, the reader may conclude that the A-IoT Tag charge time $\tau_c$ has converged, and a first estimate of $\tau_c$ may be derived by the following equation:

$$\tau_c \approx \tau_{PARS\_start} - \tau_{PARS\_stop} - \tau_{ID},$$

where $\tau_{PARS\_start}$ may denote a start time of the PARS burst, $\tau_{PARS\_stop}$ may denote a stop time of the PARS burst, and $\tau_{ID}$ may denote a duration of the A-IoT tag ID modulation.

However, the derived $\tau_c$ may not be the correct value, depending on the increase in burst duration from Step 502 to Step 503. If the increase in duration was performed with the shortest granularity, then the derived value of the A-IoT Tag charge time $\tau_c$ may be the best value that can be obtained for the current channel conditions. However, if that is not the case, then a refinement may be performed, to find the transition described in FIG. 3 in Steps 302 and 303, and thereby the best estimate of $\tau_c$ (*e.g.*, transition in FIG. 3).

At step 504, the initial burst duration may be longer than required, whereby the reader may receive more than one back-scattered A-IoT tag ID for all PARS burst. However, even if it only receives one back-scattered A-IoT Tag ID for all PARS burst, the measured RTTs may have a large variation and not be within the specified threshold. The reader can thereby inform the activator the increase the PARS periodicity.

At step 505, the measured RTTs may have a reduced variation over time and could be within the specified threshold. However, the reader may determine the transition between step 502 and 503 in order to calculate the correct $\tau_c$. The reader may inform the activator to decrease the total energy of the PARS duration.

At step 506, the transition from Step 502 to Step 503 may be performed with increased PARS periodicity, compared to Steps 2 and 3 in FIG. 5.

At step 216, Reader 240 may transmit to SCU 250 the derived $\tau_c$, the $\tau_c$ compensated $\tau_{BS\_start}$ (*i.e.*, $\tau_{BS\_start\_comp}$), and/or the individual values of $\tau_c$ and $\tau_{BS\_start}$ (see FIG. 1A).

At step 217, SCU 250 may transmit to Activator 220 the reconfigured PARS configuration, including $\tau_{PARS\_start}$, $\tau_{PARS\_stop}$, and/or PARS$_{lbg}$. Similarly, at step 218, SCU 250 may transmit to Reader 240 the reconfigured PARS configuration, including $\tau_{PARS\_start}$, $\tau_{PARS\_stop}$, and/or PARS$_{lbg}$.

FIG. 7 illustrates an example of a system according to certain example embodiments. In one example embodiment, a system may include multiple devices, such as, for example, NE 710 and/or UE 720.

NE 710 may be one or more of a base station (*e.g.*, 3G UMTS NodeB, 4G LTE Evolved NodeB, or 5G NR Next Generation NodeB), a serving gateway, a server, and/or any other access node or combination thereof.

NE 710 may further include at least one gNB-centralized unit (CU), which may be associated with at least one gNB-distributed unit (DU). The at least one gNB-CU and the at least one gNB-DU may be in communication via at least one F1 interface, at least one $X_n$-C interface, and/or at least one NG interface via a 5th generation core (5GC).

UE 720 may include one or more of a mobile device, such as a mobile phone, smart phone, personal digital assistant (PDA), tablet, or portable media player, digital camera, pocket video camera, video game console, navigation unit, such as a global positioning system (GPS) device, desktop or laptop computer, single-location device, such as a sensor or smart meter, or any combination thereof. Furthermore, NE 710 and/or UE 720 may be one or more of a citizens broadband radio service device (CBSD).

NE 710 and/or UE 720 may include at least one processor, respectively indicated as 711 and 721. Processors 711 and 721 may be embodied by any computational or data processing device, such as a central processing unit (CPU), application specific integrated circuit (ASIC), or comparable device. The processors may be implemented as a single controller, or a plurality of controllers or processors.

At least one memory may be provided in one or more of the devices, as indicated at 712 and 722. The memory may be fixed or removable. The memory may include computer program instructions or computer code contained therein. Memories 712 and 722 may independently be any suitable storage device, such as a non-transitory computer-readable medium. The term "non-transitory," as used herein, may correspond to a limitation of the medium itself (*i.e.*, tangible, not a signal) as opposed to a limitation on data storage persistency (*e.g.*, random access memory (RAM) vs. read-only memory (ROM)). A hard disk drive (HDD), random access memory (RAM), flash memory, or other suitable memory may be used. The memories may be combined on a single integrated circuit as the processor, or may be separate from the one or more processors. Furthermore, the computer program instructions stored in the memory, and which may be processed by the processors, may be any suitable form of computer program code, for example, a compiled or interpreted computer program written in any suitable programming language.

Processors 711 and 721, memories 712 and 722, and any subset thereof, may be configured to provide means corresponding to the various blocks of FIGs. 2-6. Although not shown, the devices may also include positioning hardware, such as GPS or micro electrical mechanical system (MEMS) hardware, which may be used to determine a location of the device. Other sensors are also permitted, and may be configured to determine location, elevation, velocity, orientation, and so forth, such as barometers, compasses, and the like.

As shown in FIG. 7, transceivers 713 and 723 may be provided, and one or more devices may also include at least one antenna, respectively illustrated as 714 and 724. The device may have many antennas, such as an array of antennas configured for multiple input multiple output (MIMO) communications, or multiple antennas for multiple RATs. Other configurations of these devices, for example, may be provided. Transceivers 713 and 723 may be a transmitter, a receiver, both a transmitter and a receiver, or a unit or device that may be configured both for transmission and reception.

The memory and the computer program instructions may be configured, with the processor for the particular device, to cause a hardware apparatus, such as UE, to perform any of the processes described above (*i.e.*, FIGs. 2-6). Therefore, in certain example embodiments, a non-transitory computer-readable medium may be encoded with computer instructions that, when executed in hardware, perform a process such as one of the processes described herein. Alternatively, certain example embodiments may be performed entirely in hardware.

In certain example embodiments, an apparatus may include circuitry configured to perform any of the processes or functions illustrated in FIGs. 2-6. As used in this application, the term "circuitry" may refer to one or more or all of the following: (a) hardware-only circuit implementations (such as implementations in only analog and/or digital circuitry), (b) combinations of hardware circuits and software, such as (as applicable): (i) a combination of analog and/or digital hardware circuit(s) with software/firmware and (ii) any portions of hardware processor(s) with software (including digital signal processor(s)), software, and memory(ies) that work together to cause an apparatus, such as a mobile phone or server, to perform various functions), and (c) hardware circuit(s) and or processor(s), such as a microprocessor(s) or a portion of a microprocessor(s), that requires software (*e.g.*, firmware) for operation, but the software may not be present when it is not needed for operation. This definition of circuitry applies to all uses of this term in this application, including in any claims. As a further example, as used in this application, the term circuitry also covers an implementation of merely a hardware circuit or processor (or multiple processors) or portion of a hardware circuit or processor and its (or their) accompanying software and/or firmware. The term circuitry also covers, for example and if applicable to the particular claim element, a baseband integrated circuit or processor integrated circuit for a mobile device or a similar integrated circuit in server, a cellular network device, or other computing or network device.

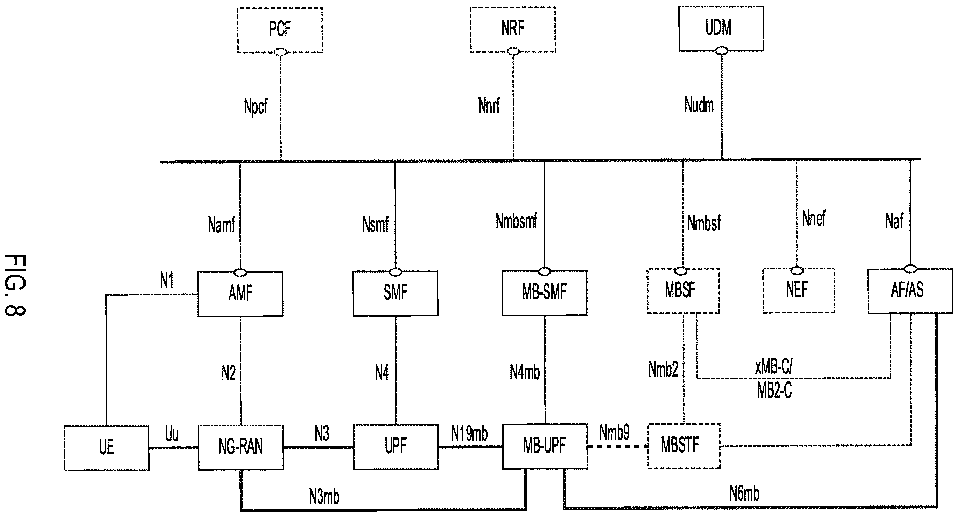

FIG. 8 illustrates an example of a 5G network and system architecture according to certain example embodiments. Shown are multiple network functions that may be implemented as software operating as part of a network device or dedicated hardware, as a network device itself or dedicated hardware, or as a virtual function operating as a network device or dedicated hardware. The NE and UE illustrated in FIG. 8 may be similar to NE 710 and UE 720, respectively. The user plane function (UPF) may provide services such as intra-RAT and inter-RAT mobility, routing and forwarding of data packets, inspection of packets, user plane quality of service (QoS) processing, buffering of downlink packets, and/or triggering of downlink data notifications. The application function (AF) may primarily interface with the core network to facilitate application usage of traffic routing and interact with the policy framework.

According to certain example embodiments, processors 711 and 721, and memories 712 and 722, may be included in or may form a part of processing circuitry or control circuitry. In addition, in some example embodiments, transceivers 713 and 723 may be included in or may form a part of transceiving circuitry.

In some example embodiments, an apparatus (*e.g.*, NE 710 and/or UE 720) may include means for performing a method, a process, or any of the variants discussed herein. Examples of the means may include one or more processors, memory, controllers, transmitters, receivers, and/or computer program code for causing the performance of the operations.

In various example embodiments, apparatus 710 may be controlled by memory 712 and processor 711 to transmit at least one positioning activation reference signal configuration associated with at least one positioning activation reference signal burst. The at least one positioning activation reference signal configuration may include at least one of duration or periodicity of the at least one positioning activation reference signal burst.

Certain example embodiments may be directed to an apparatus that includes means for performing any of the methods described herein including, for example, means for transmitting at least one positioning activation reference signal configuration associated with at least one positioning activation reference signal burst. The at least one positioning activation reference signal configuration may include at least one of duration or periodicity of the at least one positioning activation reference signal burst.

In various example embodiments, apparatus 720 may be controlled by memory 722 and processor 721 to receive from a session control unit at least one positioning activation reference signal configuration associated with at least one positioning activation reference signal burst; and calculate a convergence of return time trip. The at least one positioning activation reference signal configuration may include at least one of duration or periodicity of the at least one positioning activation reference signal burst.

Certain example embodiments may be directed to an apparatus that includes means for performing any of the methods described herein including, for example, means for receiving from a session control unit at least one positioning activation reference signal configuration associated with at least one positioning activation reference signal burst; and means for calculating a convergence of return time trip. The at least one positioning activation reference signal configuration may include at least one of duration or periodicity of the at least one positioning activation reference signal burst.

The features, structures, or characteristics of example embodiments described throughout this specification may be combined in any suitable manner in one or more example embodiments. For example, the usage of the phrases "various embodiments," "certain embodiments," "some embodiments," or other similar language throughout this specification refers to the fact that a particular feature, structure, or characteristic described in connection with an example embodiment may be included in at least one example embodiment. Thus, appearances of the phrases "in various embodiments," "in certain embodiments," "in some embodiments," or other similar language throughout this specification does not necessarily all refer to the same group of example embodiments, and the described features, structures, or characteristics may be combined in any suitable manner in one or more example embodiments.

As used herein, "at least one of the following: <a list of two or more elements>" and "at least one of <a list of two or more elements>" and similar wording, where the list of two or more elements are joined by "and" or "or," mean at least any one of the elements, or at least any two or more of the elements, or at least all the elements.

Additionally, if desired, the different functions or procedures discussed above may be performed in a different order and/or concurrently with each other. Furthermore, if desired, one or more of the described functions or procedures may be optional or may be combined. As such, the description above should be considered as illustrative of the principles and teachings of certain example embodiments, and not in limitation thereof.

One having ordinary skill in the art will readily understand that the example embodiments discussed above may be practiced with procedures in a different order, and/or with hardware elements in configurations which are different than those which are disclosed. Therefore, although some embodiments have been described based upon these example embodiments, it would be apparent to those of skill in the art that certain modifications, variations, and alternative constructions would be apparent, while remaining within the spirit and scope of the example embodiments.

Partial Glossary

| | |
|---|---|
| 3GPP | 3rd Generation Partnership Project |
| 5G | 5th Generation |
| 5GC | 5th Generation Core |
| 6G | 6th Generation |
| AF | Application Function |
| A-IoT | Ambient Internet of Things |
| ASIC | Application Specific Integrated Circuit |
| CBSD | Citizens Broadband Radio Service Device |
| CN | Core Network |
| CPU | Central Processing Unit |
| CU | Centralized Unit |
| dBm | Decibel-milliwatts |
| DU | Distributed Unit |
| eMBB | Enhanced Mobile Broadband |
| eMTC | Enhanced Machine Type Communication |
| eNB | Evolved Node B |
| FDD | Frequency Division Duplex |
| FWA | Fixed Wireless Access |
| gNB | Next Generation Node B |
| GPS | Global Positioning System |

| | |
|---|---|
| HDD | Hard Disk Drive |
| ID | Intentional Discharge |
| IoT | Internet of Things |
| LMF | Location Management Function |
| LORA | Long Range Radio |
| LPWA | Low-Power Wide-Area |
| LTE | Long-Term Evolution |
| LTE-A | Long-Term Evolution Advanced |
| LWF | Location Management Function |
| mA | Milliampere |
| MEMS | Micro Electrical Mechanical System |
| MIMO | Multiple Input Multiple Output |
| mMTC | Massive Machine Type Communication |
| NB-IoT | Narrowband Internet of Things |
| NE | Network Entity |
| NG | Next Generation |
| NG-eNB | Next Generation Evolved Node B |
| NG-RAN | Next Generation Radio Access Network |
| NR | New Radio |
| NW | Network |
| PARS | Positioning Activation Reference Signal |
| PDA | Personal Digital Assistance |
| PRB | Physical Resource Block |
| PRS | Position Reference Signal |
| QoS | Quality of Service |
| RAM | Random Access Memory |
| RAN | Radio Access Network |
| RAT | Radio Access Technology |
| RedCap | Reduced Capability |
| RF | Radio Frequency |
| RFID | Radio Frequency Identification |
| RFH | Radio Frequency Harvesting |
| ROM | Read-Only Memory |
| RTT | Return Time Trip |
| SCU | Session Control Unit |
| SL | Sidelink |
| SRS | Sounding Reference Signal |
| TCL | Tag Charge Level |
| TDD | Time Division Duplex |
| Tx | Transmission |
| UE | User Equipment |
| UMB | Ultra Mobile Broadband |
| UMTS | Universal Mobile Telecommunications System |
| UPF | User Plane Function |
| URLLC | Ultra-Reliable and Low-Latency Communication |
| UTRAN | Universal Mobile Telecommunications System Terrestrial Radio Access Network |

**Claims**

1. An apparatus comprising:

    means for transmitting at least one positioning activation reference signal configuration associated with at least one positioning activation reference signal burst, wherein the at least one positioning activation reference signal configuration comprises at least one of a duration or a periodicity of the at least one positioning activation reference signal burst.

2. The apparatus of claim 1, wherein the at least one positioning activation reference signal configuration comprises at least one of: a start time of the at least one positioning activation reference signal burst, a stop time of the at least one positioning activation reference signal burst, or a highest energy granularity of the at least one positioning activation reference signal burst.

3. The apparatus of claim 1 or 2, further comprising: means for receiving from a reader device a request for reconfiguration of a positioning activation reference signal burst sequence.

4. The apparatus of any of claims 1-3, further comprising: means for receiving at least one of: a derived charge time ($\tau_c$), a compensated start time of a received back-scatter signal ($\tau_{BS\_start\_comp}$), or a start time of the received back-scatter signal ($\tau_{BS\_start}$).

5. The apparatus of any of claims 1-4, further comprising: means for transmitting a reconfigured positioning activation reference signal configuration.

6. The apparatus of any of claims 1-5, wherein the at least one positioning activation reference signal configuration is transmitted to at least one of: an activator device or a reader device.

7. The apparatus of any of claims 3-6, wherein the request comprises at least one of: an indication of an increase or decrease of a total energy of the at least one positioning activation reference signal burst, an indication of an increase or decrease of a periodicity of the positioning activation reference signal burst, or utilizing a highest positioning activation reference signal burst energy granularity.

8. An apparatus comprising:

means for receiving, from a session control unit, at least one positioning activation reference signal configuration associated with at least one positioning activation reference signal burst, wherein the at least one positioning activation reference signal configuration comprises at least one of a duration or a periodicity of the at least one positioning activation reference signal burst; and
means for calculating a convergence of a return time trip.

9. The apparatus of claim 8, wherein the at least one positioning activation reference signal configuration comprises at least one of: a start time of the at least one positioning activation reference signal burst, a stop time of the at least one positioning activation reference signal burst, or a highest energy granularity of the at least one positioning activation reference signal burst.

10. The apparatus of claim 8 or 9, further comprising: means for transmitting to the session control unit a request for reconfiguration of a positioning activation reference signal burst sequence.

11. The apparatus of any of claims 8-10, further comprising:
means for transmitting to the session control unit at least one of: a derived charge time ($\tau_c$), a compensated start time of a received back-scatter signal ($\tau_{BS\_start\_comp}$), or a start time of the received back-scatter signal ($\tau_{BS\_start}$).

12. The apparatus of any of claims 8-11, further comprising:
means for receiving, from the session control unit, a reconfigured positioning activation reference signal configuration.

13. The apparatus of any of claims 10-12, wherein the request comprises at least one of: an indication of an increase or decrease of a total energy of the at least one positioning activation reference signal burst, an indication of an increase or decrease of a periodicity of the positioning activation reference signal burst, or utilizing a highest positioning activation reference signal burst energy granularity.

14. The apparatus of any of claims 8-13, wherein the convergence of a return time trip is calculated based on the received positioning activation reference signal configuration.

15. A method comprising:

receiving, by a reader device, and from a session control unit, at least one positioning activation reference signal configuration associated with at least one positioning activation reference signal burst, wherein the at least one positioning activation reference signal configuration comprises at least one of a duration or a periodicity of the at least one positioning activation reference signal burst; and
calculating, by the reader device, a convergence of a return time trip.

FIG. 1A

FIG. 1B

FIG. 2

FIG. 3

FIG. 4

FIG. 5

| | |
|---|---|
| ▮ | PARS burst |
| ▤ | Received back-scattered ID from the A-IoT Tag |
| ▯ | Partially received (invalid) back-scattered ID from A-IoT Tag |
| ◣ | A-IoT Tag charging and charge level |
| ▤ | Modulation of the back-scattered signal at the A-IoT Tag |
| -------- | A-IoT Tag discharging |
| ········ | Required Tag Charge Level (TCL) to enable modulation of the back-scattered signal |

## Legend for Figs 3-5

FIG. 6

FIG. 7

FIG. 8

Europäisches
Patentamt

European
Patent Office

Office européen
des brevets

# EUROPEAN SEARCH REPORT

Application Number

EP 23 21 7396

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | WO 2021/155210 A1 (IDAC HOLDINGS INC [US]) 5 August 2021 (2021-08-05) * figure 10 * * paragraph [0004] * * paragraph [0140] - paragraph [0176] * * paragraph [0201] - paragraph [0202] * ----- | 1-15 | INV. G01S13/75 G01S13/76 ADD. G01S5/00 |
| X  A | US 2022/086822 A1 (BAO JINGCHAO [US] ET AL) 17 March 2022 (2022-03-17) * paragraph [0079] * * paragraph [0130] - paragraph [0132] * ----- | 1  2-15 | |
| X  A | US 2022/053411 A1 (BAO JINGCHAO [US] ET AL) 17 February 2022 (2022-02-17) * figure 10 * * paragraph [0129] * ----- | 1  2-15 | |

| TECHNICAL FIELDS SEARCHED (IPC) |
|---|
| G01S |

The present search report has been drawn up for all claims

| Place of search | Date of completion of the search | Examiner |
|---|---|---|
| Munich | 3 June 2024 | Bomart, Sébastien |

EPO FORM 1503 03.82 (P04C01)

## ANNEX TO THE EUROPEAN SEARCH REPORT
## ON EUROPEAN PATENT APPLICATION NO.

EP 23 21 7396

03-06-2024

| Patent document cited in search report | | Publication date | Patent family member(s) | | Publication date |
|---|---|---|---|---|---|
| WO 2021155210 | A1 | 05-08-2021 | BR | 112022015132 A2 | 27-09-2022 |
| | | | CN | 115210596 A | 18-10-2022 |
| | | | EP | 4097500 A1 | 07-12-2022 |
| | | | JP | 2023513042 A | 30-03-2023 |
| | | | US | 2023074373 A1 | 09-03-2023 |
| | | | WO | 2021155210 A1 | 05-08-2021 |
| US 2022086822 | A1 | 17-03-2022 | CN | 116457681 A | 18-07-2023 |
| | | | EP | 4211482 A1 | 19-07-2023 |
| | | | KR | 20230066336 A | 15-05-2023 |
| | | | US | 2022086822 A1 | 17-03-2022 |
| | | | WO | 2022056256 A1 | 17-03-2022 |
| US 2022053411 | A1 | 17-02-2022 | CN | 116368395 A | 30-06-2023 |
| | | | EP | 4196811 A1 | 21-06-2023 |
| | | | KR | 20230049625 A | 13-04-2023 |
| | | | TW | 202215884 A | 16-04-2022 |
| | | | US | 2022053411 A1 | 17-02-2022 |
| | | | WO | 2022036027 A1 | 17-02-2022 |

EPO FORM P0459